# EUROPEAN PATENT APPLICATION

(11) **EP 4 292 845 A1**
(43) Date of publication of application: **20.12.2023**
(21) Application number: 22178691.6
(22) Date of filing: 13.06.2022
(51) Int. Cl.: B60J 10/88, B60J 10/79

(54) **SEALING PROFILE STRAND AND SEALING ARRANGEMENT FOR A SLIDING WINDOW**

(71) Applicant: Cooper Standard GmbH, 88131 Lindau (DE)
(72) Inventor: Roeser, Achim, 88131 Lindau (DE)
(74) Representative: Witte, Weller & Partner Patentanwälte mbB

(57) **Abstract**

A sealing profile strand (34) for mounting to a frame profile (36) of a window frame (15) for a sliding window (18) which is slidable along a third direction (Z), the sealing profile strand (34) extending along a first direction (X) and comprising a support segment (44) for mounting the sealing profile strand (34) to the frame profile (36), the support segment (44) including a relatively hard material, a sealing segment (42) which is mainly formed of a relatively soft material, which is attached to the support segment (44), and which includes at least one inner sealing portion (54) and an edge sealing portion for sealing against the window (18) in its closed state, wherein the support segment (44) comprises a vertical support section (66) comprising a vertical protrusion (78), wherein the edge sealing portion comprises a window edge closure lip (76) which extends from the vertical protrusion (78) to the inside (I) in a second direction (Y).

## Description

The present invention relates to a sealing profile strand for mounting to a frame profile of a window frame for a sliding window which is slidable along a third direction, the sealing profile strand extending along a first direction and comprising a support segment for mounting the sealing profile strand to the frame profile, the support segment including a relatively hard material, a sealing segment which is mainly formed of a relatively soft material, which is attached to the support segment, and which includes at least one inner sealing portion configured to engage an inner surface of the window, and an edge sealing portion configured to seal an edge of the window in its closed state.

Further, the present invention relates to a sealing arrangement for a sliding window, including a frame profile and a sealing profile strand as defined above.

In the field of sealing arrangements for sliding windows, particularly sliding windows of doors of vehicles, the outer appearance becomes more and more important.

In earlier sealing arrangements, the front and rear side edges of a sliding window have been guided and sealed by more or less U-shaped sealing profile strands which enclose the respective side edges from the inside and the outside.

More recently, it has become usual to arrange the front and rear guide structures for guiding the sliding movement of the window on the inside of the window only. Such a concept is disclosed for example in document US 2020/0338966 A1.

The upper edge of the sliding window typically is also received within a U-shaped sealing profile strand, which is typically called a "header profile".

Therefore, there is typically a relatively undesirable big step between the movable side window and an upper frame under glass door structure.

This big vertical step (third direction) on the outside of the window and the outside of the header profile is considered to be unattractive, particularly in view of the fact that the front and rear side edges of the window are guided on the inside thereof, so that the outer appearance can be made essentially flush in the first direction. Additionally, so-called flush outer vehicle surfaces without any step between body, door and glass transitions typically are driven by the goal of aerodynamic perfection. Namely, disturbing frame steps, which create turbulences and therefore have a negative impact on the overall aerodynamics, are minimized.

Traditional header profiles are shown for example in documents EP 0 799 735 A1 and DE 10 2005 028 738 B3.

The above-mentioned document US 2020/0338966 A1 discloses another type of header profile. It is shown that a distance between an outer surface of the window and an outer surface of the header profile ("cross bar") can be made small. In this case, an upper edge of the sliding window engages the underside of a profile segment which extends in the first direction.

An additional consideration in sealing arrangements for cars, particularly for sliding windows of cars, is security, particularly again an intrusion from the outside. In this context it is quite important that measures are taken which prevent the window from being moved in the area of its upper edge in a second direction which is transversal to both the first direction and the third direction. In other words, the second direction is a transversal direction of the car. Transversal movements of the window are to be avoided as these might create openings for intruding the passenger compartment of the vehicle in parked position and weakening the sealing performance while driving.

In view of the above, it is an object of the invention to provide an improved sealing profile strand which is particularly suitable as a header profile, and a sealing arrangement comprising such a sealing profile strand.

The object is achieved by a sealing profile strand for mounting to a frame profile of a window frame for a sliding window which is slidable along a third direction, the sealing profile strand extending along a first direction and comprising (i) a support segment for mounting the sealing profile strand to the frame profile, the support segment including a relatively hard material, (ii) a sealing segment which is mainly formed of a relatively soft material, which is attached to the support segment, and which includes at least an inner sealing portion configured to engage an inner surface of the window, and includes an edge sealing portion configured to seal an edge of the window in its closed state, wherein the support segment comprises a vertical support section which is configured to be arranged on the outside of the frame profile in a second direction which is perpendicular to the first direction and to the third direction, wherein the support segment comprises a vertical protrusion which extends with respect to the vertical support section in the third direction, wherein the sealing portion comprises a window edge closure lip which extends from the vertical protrusion of the support segment to the inside in the second direction and which is configured to be engaged by the edge of the window.

Further, the above object is achieved by a sealing arrangement for a sliding window, including a frame profile and a sealing profile strand of the invention.

Preferably, the support segment is entirely formed of the relatively hard material. In an alternative preferred embodiment, the support segment may be formed from a base material that may be harder than the soft material of the sealing segment or may have the same hardness as the soft material of the sealing segment, but in each case includes a reinforcement portion of a material harder than the soft material of the sealing segment. Further, it is preferred if the sealing segment is entirely formed of the relatively soft material.

The sealing segment preferably is extruded around the support segment.

It is in general preferred, if the support segment and the sealing segment are formed by extrusion, particularly, by a co-extrusion process, in which the support segment and the sealing segment are produced in a common extrusion step.

The vertical support section of the support segment, which is configured to be arranged on the outside of the frame profile in a second direction (transversal/lateral direction) which is perpendicular to the first direction (preferably the longitudinal direction of a vehicle) and to the third direction (preferably a vertical direction of a vehicle), is preferably the transversally outermost part of the support segment of the sealing profile strand.

Typically, the frame profile includes a portion which extends in the transversal direction, and the vertical support section is arranged on the outside of this portion of the frame profile.

In addition, the support segment comprises a vertical protrusion which extends with respect to the vertical support section in the third direction. The vertical protrusion preferably extends downwardly in a direction to the window and preferably is arranged on the outside of the window in its closed state. Further, it is preferred if at least a part of the vertical protrusion overlaps with an upper part of the window in its closed state in the vertical direction (third direction). In any case, it is preferred that the vertical protrusion and/or the window edge closure lip overlap with an upper part of the window in the third direction.

This embodiment allows to limit transversal movements of the upper part of the window if the window is in its closed condition. Therefore, intrusion attempts into the passenger compartment can be significantly impeded.

The vertical protrusion preferably extends downwardly from a lower free end of the vertical support section.

Further, the edge sealing portion of the sealing segment comprises a window edge closure lip which extends from the vertical protrusion of the support segment to the inside in the second direction and which is configured to be engaged by the edge of the window, particularly the upper edge of the window. The window edge closure lip preferably extends from a lower end of the vertical protrusion of the support segment.

Preferably, the window edge closure lip is elastically deflected and/or compressed when the window is in its closed state. At least a part of the window edge closure lip, in this case, might be pressed against a lower surface of a lower support section of the support segment. The lower support section preferably rests against a lower surface of a transversal portion of the frame profile.

In essence, two advantages may be achieved. One, a step between an outer surface of the window and the sealing profile strand may be made small. Secondly, safety of the sealing arrangement may be improved, as transversal movements of the window are preferably impeded or at least made more difficult.

The inner sealing portion comprises at least one lip which extends from the inside to the outside, i.e. in a direction opposite to the direction into which the window edge closure lip extends.

The first, second and third directions described herein are used to specify relative positions of individual elements. These directions can be Cartesian, such that the directions are orthogonal to each other. However, this is not meant to limit the present specification to strictly orthogonal directions. In the present context, the wordings "perpendicular" and "orthogonal" are to be understood as approximately "perpendicular" and approximately "orthogonal".

Therefore, the above object is achieved in full.

In a preferred embodiment of the sealing profile strand, the support segment comprises a lower support section which is configured to be arranged on a lower side a transversal portion of the frame profile in the third direction.

The frame profile further includes preferably a vertical portion against which a vertical carrier portion of the support segment rests.

Further, it is preferred if the lower support section comprises a locking section which is configured to be engaged by a locking tongue of the frame profile.

Preferably, the locking engagement is such that the sealing profile strand is tensioned (biased) to the inside in the second direction.

In addition, it is preferred if (i) a groove is formed between the vertical protrusion and the locking section of the support segment, and/or if (ii) the window edge closure lip extends from the vertical protrusion of the support segment across at least a part of the groove in the second direction.

Preferably, the groove is configured such that the upper edge of the window in its closed state is inserted at least partially into the groove in the third direction.

Again, this embodiment might enhance the safety of the sealing arrangement which is formed by the sealing profile strand.

In another preferred embodiment, the window edge closure lip is configured to extend from the vertical protrusion of the support segment across at least the entire upper edge of the window in the second direction.

Therefore, it is preferred if the extension amount of the window edge closure lip in the second direction is larger than the thickness of the window in the second direction.

According to another preferred embodiment, the sealing segment includes an upper sealing portion which is configured to engage an upper part of the frame profile.

The upper sealing portion might include an outer lip and an inner lip which are displaced from each other in the second direction.

This improves the sealing performance.

For the same purpose, it is preferred if the inner sealing portion of the sealing segment includes a lower lip and an upper lip which are displaced in the third direction.

The upper sealing portion and the window edge closure lip can be attached to the support segment at locations which are distant from each other.

In a preferred embodiment, the upper sealing portion and the window edge closure lip are connected to each other.

In this case, it is preferred if a lining portion of the sealing segment is arranged on the outside of the vertical support section, wherein the body sealing portion and the window edge closure lip are preferably connected to each other by means of the lining segment.

The lining portion may be provided as a portion of the sealing segment, which is visible from the outside. Further, the lining portion might be formed so as to have an aesthetically satisfying appearance, for example by a special material compound grade, by an appearance coating, by an appearance film, or the like.

It is further preferred if a lining segment is attached to the outside of the vertical support section in the second direction.

The lining segment can be a part which is formed separately from the sealing segment and from the support segment. Particularly, it may be a part of a relatively hard material which is attached to the outside of the vertical support section in a manner similar to an applique or the like.

The lining segment might have an aesthetically pleasing appearance on its outside surface, for example by a special material compound grade, by an appearance coating, by an appearance film, or the like..

It is preferred if the lining segment comprises a form closure element or lug which is introduced into a receptacle of the support segment.

The form closure element or lug might have an enlarged portion at its free end, which lockingly engages into a correspondingly enlarged portion of the receptacle when fully inserted therein.

The receptacle is preferably provided in a lower support section of the support segment.

The lug may be a portion which extends over the entire length of the header sealing profile strand in the first direction. In this case, the receptacle is a slot-like receptacle. On the other hand, the lug might be a single lug, or a plurality of individual lugs can be formed which are inserted into a single or a plurality of receptacles of the support segment.

In another preferred embodiment, the support segment comprises an upper support section and a lower support section which are configured to be arranged on opposite sides of a transversal portion of the frame profile in the third direction.

The upper support section and the lower support section are preferably connected to each other via the vertical support section.

The upper sealing portion is preferably connected to the upper support section. The inner sealing portion is preferably connected to the lower support section.

The lower support section might include a portion which extends in the transversal direction. Further, the lower support section might include a vertical carrier portion which extends from an inner end of the transversal portion of the lower support section in the vertical direction.

Preferably, the window edge closure lip and at least one lip of the inner sealing portion overlap each other when viewed in the third (vertical) direction.

In a preferred embodiment, the sealing segment is mainly made of Rubber elastomer and/or thermoplastic materials.

In another preferred embodiment, the support segment is mainly made of rubber elastomer and/or thermoplastic materials. Preferably, the support segment and the sealing segment are each formed of rubber elastomer or are each formed of thermoplastic materials.

The hardness of the sealing segment is preferably in a range from 45 ShA (Shore A hardness, ASTM D2240) to 75 ShA (Shore A hardness, ASTM D2240).

The support segment has a hardness which is preferably in a range from 70 ShA (Shore A hardness, ASTM D2240) to 45 ShD (Shore D hardness, ASTM D2240).

In any case, the sealing segment is preferably made of a material which is softer than the material of the support segment.

The support segment may be formed entirely from a thermoplastic material. In a preferred embodiment, the support segment includes a reinforcement portion.

The reinforcement portion might be co-extruded with a plastic main portion of the support segment. The reinforcement portion may be made of a material which is harder than the plastic main portion of the support segment. The reinforcement portion may be made of a metal.

Further, it is preferred if the sealing segment and the support segment are integrated by co-extrusion.

It will be understood that the afore-mentioned features and to be described hereinafter cannot only be used in the respectively given combination, but also in different combinations or independently, without leaving the scope of the present invention.

Further features and advantages of the invention can be taken from the subsequent description of preferred embodiments with reference to the drawings. In the drawings show:
- Fig. 1: is a schematic side view of a vehicle;
- Fig. 2: is a sectional view along a plane II-II in Fig. 1 and shows an embodiment of a header sealing profile strand (nominal upper end position of window);
- Fig. 3: is a view similar to Fig. 2 and shows a state in which an upper edge of a window engages a window edge closure lip of the header sealing profile strand (maximum upper end position of window); and
- Fig. 4: is a view similar to Fig. 2 and shows another embodiment of a header sealing profile strand.

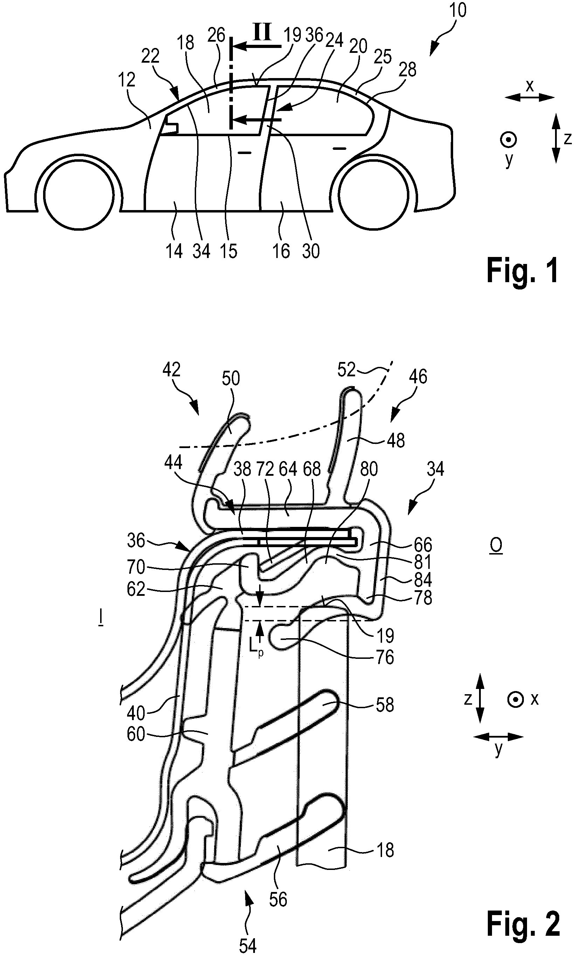

Fig. 1 is a side view of a passenger automotive vehicle 10. The vehicle 10 has a body 12 which includes a front door 14 and a rear door 16. The front door 14 and/or the rear door 16 define a window frame 15.

The front door 14 has a front door window 18. The front door window 18 has an upper edge 19.

The rear door 16 has a rear door window 20.

The body 12 defines an A-pillar region 22, a B-pillar region 24, and a C-pillar region 25. A first direction, which corresponds to a longitudinal direction of the vehicle 10, is shown at X. A second direction (transversal/lateral direction) is shown at Y. A third direction (vertical direction) is shown at Z.

The front door window 18 is arranged between the A-pillar region 22 and the B-pillar region 24. The rear door window 20 is arranged between the B-pillar region 24 and the C-pillar region 25.

The front door 14 includes a front door window sealing arrangement 26. The rear door 16 includes a rear door window sealing arrangement 28. The front door window sealing arrangements 26, 28 serve to seal a periphery of the respective door windows.

An applique arrangement 30 may be provided both on the front door window sealing arrangement 26 and the rear door window sealing arrangement 28. The front door 14 and the rear door 16 are regular doors where the hinges for a swivel movement of the respective doors are arranged at the front. However, the doors may also be so-called "suicide" doors, where the hinges are arranged at the opposite section of the doors. As a third alternative, one or both of the doors may be sliding doors.

Each of the front door window sealing arrangement 26 and the rear door window sealing arrangement 28 include a header sealing profile strand 34 which is adapted to provide a sealing for the respective upper edges (for example the upper edge 19 of the front door window) of the respective windows 18, 20.

The header sealing profile strand 34 is mounted to a respective upper door frame profile 36 of the respective door 14, 16.

Typically, the front door 14 and the rear door 16 share a common header sealing profile strand. In other applications, the front door 14 and the rear door 16 each have their own header sealing profile strand.

In the following, header sealing profile strands 34 are described with respect to the front door window 18. However, the same description may be applied to the rear door window 20.

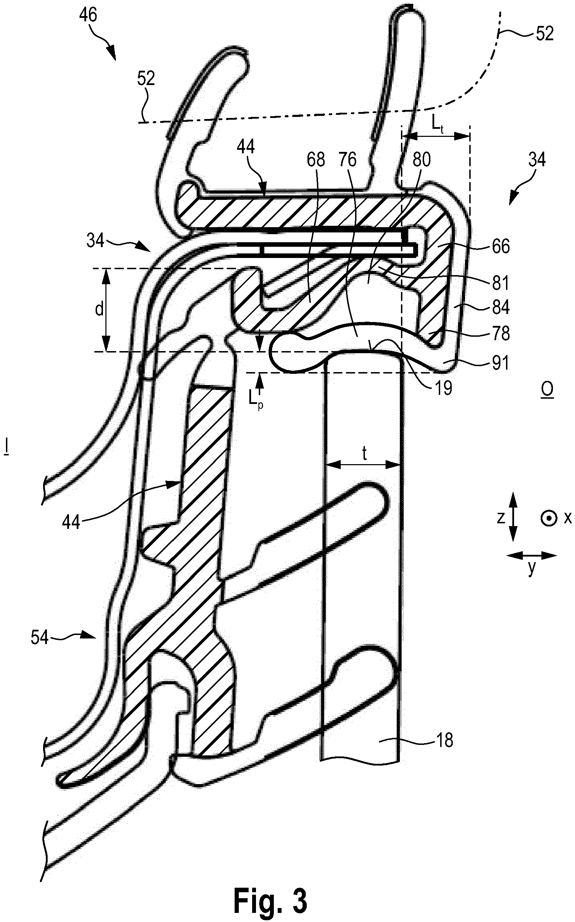

Figs. 2 and 3 are sectional views along a plane II-II in Fig. 1 and show an embodiment of a header sealing profile strand 34. The header sealing profile strand 34 is, as mentioned above, attached to an upper door frame profile 36. The upper door frame profile 36 includes a transversal portion 38 which extends in the second direction Y, and a vertical portion 40 which is essentially extends along the third direction Z. The transversal portion 38 has an inner end which is arranged on the inside I of a passenger compartment of the vehicle 10. The opposite end of the transversal portion 38 extends to the outside O.

The vertical portion 40 is connected to the inside end of the transversal portion 38 and extends downwardly.

The header sealing profile strand 34 includes a sealing segment 42 and a support segment 44. The sealing segment 42 is formed of a relatively soft material, for example rubber elastomer and/or thermoplastic (elastomer) material. The support segment is formed of a relatively hard material, for example rubber elastomer and/or thermoplastic (elastomer) material adopting the same material family as the sealing segment.

The upper door frame profile 36 is typically made from metal or compound sheet metal. The sealing segment 42 and the support segment 44 are typically made from thermoplastic materials. Preferably, the sealing segment 42 and the support segment 44 are integrated by co-extrusion.

The header sealing profile strand 34 is mounted to the upper door frame profile 36 by means of the support segment 44, which engages the upper door frame profile 36 in a fixedly attached manner, preferably in a lockingly engaging manner.

The sealing segment 42 includes an upper sealing portion 46 which is arranged above the transversal portion 38 and serves to seal the upper part of the respective door against a door frame of the body 12, or against an upper part of the upper door frame profile 36. An exemplary upper part of the upper door frame profile 36 is schematically shown in Fig. 2 at 52. The upper sealing portion 46 includes an inner lip 50 and an outer lip 48, which are distant from each other in the second direction Y. However, the upper sealing portion 46 may include only a single lip, or more than two lips.

The sealing segment 42, further, includes an inner sealing portion 54. The inner sealing portion 54 includes a lower lip 56 and an upper lip 58. The inner sealing portion 54 engages an inner surface of the window 18.

The inner sealing portion 54 is attached to a vertical carrier portion 60 of the support segment 44. The vertical carrier portion 60 rests against the vertical portion 40 of the upper door frame profile 36. Further, the vertical carrier portion 60 is connected to other portions of the support segment 44, for example via an intermediate sealing portion 62 of the sealing segment 42, which includes a sealing lip that engages an outside surface of the vertical portion 40.

The support segment 44 includes an upper support section 64 which is arranged on top of the transversal portion 38. The upper sealing portion 46 is connected to the upper support section 64.

Further, the support segment 44 includes a lower support section 68 which is arranged on the underside of the transversal portion 38 and is connected to the vertical carrier portion 60 (directly, or indirectly via the intermediate sealing portion 62).

Further, the upper support section 64 and the lower support section 68 are connected to each other by means of a vertical support section 66 which is arranged on the outside of the transversal portion 38. In other words, the upper support section 64, the vertical support section 66, and the lower support section 68 together form a U-shaped profile which is pushed from the outside on the transversal portion 38 of the upper door frame profile 36 so as to mount it thereon.

Preferably, the support segment 44 further includes a vertical form or force closing locking section 70 which is arranged at an inner end of the lower support section 68 and has a portion that extends upwardly. The transversal portion 38 of the door frame profile 36 preferably includes a locking tongue 72 which extends obliquely from the outside O to the inside I and engages the vertical locking section 70 of the support segment 44. The locking engagement can be configured such that the sealing profile strand 34 is tensioned to the inside I.

The sealing segment 42 includes a window edge closure lip 76. The window edge closure lip 76 extends from a vertical protrusion 78 of the support segment 44.

The vertical protrusion 78 extends from the vertical support section 66 in the third direction (downwardly). In other words, the vertical protrusion 78 is an extension of the vertical support section 66 and has a free lower end. The window edge closure lip 76 is preferably attached to the free lower end of the vertical protrusion 78, and extends to the inside in the second direction Y

On the inside of the vertical protrusion 78, a longitudinal groove 80 may be formed, which preferably is arranged between the vertical protrusion 78 and the locking section 70 of the support segment 44. Preferably, the groove 80 overlaps in the second (transversal) direction Y with an upper edge 19 of the window 18.

The window edge closure lip 76 extends from the free end of the vertical protrusion 78 inwardly, so as to extend across the entire upper edge of the window and, preferably, at least across a part of the longitudinal groove 80 in the second (transversal) direction.

The window edge closure lip 76 overlaps with at least one of the lower lip 56 and the upper lip 58, when viewed in the third (vertical) direction. The window edge closure lip 76 extends from the outside O to the inside I, whereas the lower lip 56 and the upper lip 58 extend from the inside I to the outside O.

In Fig. 2, the window edge closure lip 76 is shown in a non-deflected state, although the window 18 is in its nominally closed position.

Fig. 3 shows the header sealing profile strand 34 of Fig. 2, wherein the window 18 has reached its maximum closed position, such that the upper edge 19 deflects the window edge closure lip 76 and may enter at least partially into the longitudinal groove 80 of the support segment 44.

In other words, the vertical protrusion 78 and/or an outer part of the window edge closure lip 76 overlaps with an upper portion of the window 18 when viewed in the second (transversal) direction. Therefore, the vertical protrusion 78 and/or the outer part of the window edge closure lip 76 provides security against intrusion attempts, where an intruder tries to move the upper portion of the window 18 in the transversal direction Y to the outside, to as to access the inside I of the passenger compartment.

Further, the header sealing profile strand 34 of Figs. 2 and 3 provides a good sealing structure, particularly of the upper edge 19 of the window 18, which reduces the intrusion of liquids and reduces noise in the inside I of the passenger compartment.

As mentioned above, the sealing segment 42 and the support segment 44 are preferably co-extruded.

Therefore, portions of the sealing segment 42 are directly and permanently attached to the support segment 44. In Fig. 3, the support segment 44 is shown as a hatched cross section. The several lips etc. of the sealing segment 42 are shown nonhatched.

As can be seen in Figs. 2 and 3, the upper sealing portion 46 and the window edge closure lip 76 are preferably connected to each other by means of a lining portion 84 which is arranged on the outside of the vertical support section 66 and the vertical protrusion 78.

The lining portion 84 may form a visible portion of the header sealing profile strand 34 and may be provided based on an appearance material, with a coating or the like in order to improve the overall appearance.

The header sealing profile strand 34 extends beyond an outer surface of the window 18 by a transversal protrusion amount Lt which is preferably smaller than 6 mm, and further preferred smaller than 5 mm, and most preferred smaller than or equal to 3.5mm.

An overlap in the vertical direction Z between the sealing profile strand 34 on the outside of the window (vertical protrusion 78 and/or outer part of window closure lip 76) and the window 18 is shown at Lp (vertical protrusion amount). The vertical protrusion amount Lp in upper window end position is preferably larger than 2 mm, particularly larger than 3 mm and most preferred larger than 3 mm. Typically, the vertical protrusion amount Lp is smaller than 8 mm.

The transversal protrusion amount Lt may be determined by a transversal thickness of the vertical support section 66, and/or by a transversal thickness of the optional lining portion 84 (or of the lining segment 86), which are arranged on the outside of the transversal portion 38 of the upper door frame profile 36.

Further, a thickness t of the window 18 in the transversal direction Y is preferably larger than the vertical protrusion amount Lp. Further, it is preferred if the thickness t is larger than the transversal protrusion amount Lt.

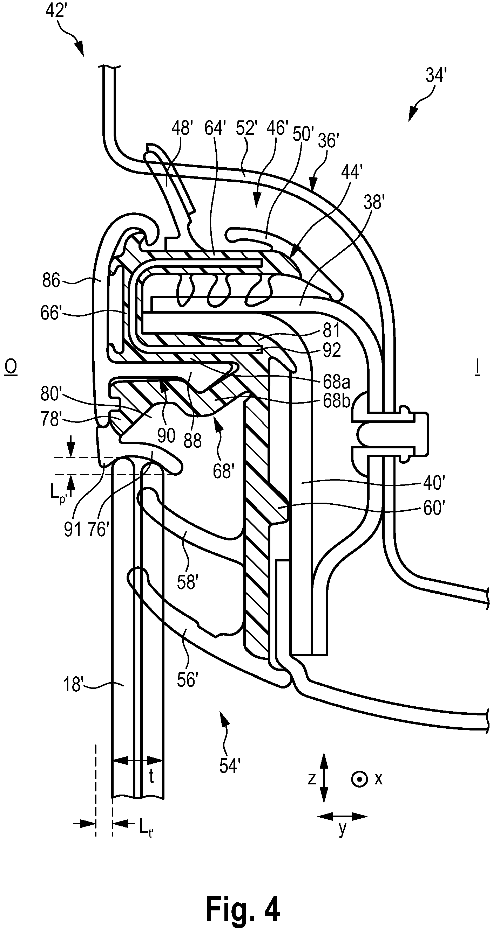

Fig. 4 shows another embodiment of a header sealing profile strand 34', which corresponds with respect to structure and function in general to the header sealing profile strand 34 of Figs. 2 and 3. Therefore, mostly differences against the header sealing profile strand 34 are described below.

In the header sealing profile strand 34, a separate lining segment 86 is provided. The lining segment 86 is attached to the outside of the support segment 44. Particularly, the lining segment 86 has an upper hook which engages an upwardly extending lug of the support segment 44'. Further, the lining segment 86 itself comprises a lug 88 which is inserted into a receptacle 90 of the lower support section 68. The lower support section 68, therefore, includes an upper part 68a which is arranged between the receptacle 90 and the transversal portion 38' of the upper door frame profile 36', and a lower part 68b which is arranged below the receptacle 90.

The lower support section 68' includes a vertical protrusion 78', from which the window edge closure lip 76' extends in the transversal direction Y.

The window edge closure lip 76' includes a portion which is arranged on the outside O of the outer surface of the window 18' and provides security against intrusion attempts. The outer portion of the window edge closure lip 76' is shown at 91 in Fig. 4 (and correspondingly in Fig. 3 for the first embodiment).

The support segment 44' includes a U-shaped reinforcement portion 92 which is U-shaped and extends from the upper support section 64 through the vertical support section 66' and the lower support section 68'.

The reinforcement portion 92 may be made of metal, particularly of spring steel or the like which allows to reliably mount the header sealing profile strand 34' to the upper door frame profile 36'.

### Reference numerals

- 10: automobile/vehicle
- 12: body
- 14: front door
- 15: window frame
- 16: rear door
- 18: front door window
- 19: upper edge (18)
- 20: rear door window
- 22: A-pillar region
- 24: B-pillar region
- 25: C-pillar region
- 26: front door window sealing arrangement
- 28: rear door window sealing arrangement
- 30: applique arrangement

- 34: header sealing profile strand
- 36: upper door frame profile (14)
- 38: transversal portion (36)
- 40: vertical portion (36)
- 42: sealing segment (34)
- 44: support segment (34)
- 46: upper sealing portion (42)
- 48: outer lip (46)
- 50: inner lip (46)
- 52: upper part (36)
- 54: inner sealing portion (42)
- 56: lower lip (54)
- 58: upper lip (54)
- 60: vertical carrier portion (54)
- 62: intermediate sealing portion
- 64: upper support section (44)
- 66: vertical support section (44)
- 68: lower support section (44)
- 68a: upper part
- 68b: lower part
- 70: vertical locking section (44)
- 72: locking tongue (36/38)

- 76: window edge closure lip (34) (edge sealing portion)
- 78: vertical protrusion (44)
- 80: longitudinal groove
- 81: engagement portion (68)
- 84: lining portion (42)
- 86: lining segment
- 88: lug (86)
- 90: receptacle (68)
- 91: outer portion (76)
- 92: reinforcement portion

- X: longitudinal (first) direction
- Z: vertical (third) direction
- Y: transversal (second) direction
- I: inside
- O: outside
- Lp: vertical protrusion amount
- Lt: transversal protrusion amount
- t: thickness (18)

## Claims

1. A sealing profile strand (34) for mounting to a frame profile (36) of a window frame (15) for a sliding window (18) which is slidable along a third direction (Z), the sealing profile strand (34) extending along a first direction (X) and comprising
- a support segment (44) for mounting the sealing profile strand (34) to the frame profile (36), the support segment (44) including a relatively hard material,
- a sealing segment (42) which is mainly formed of a relatively soft material, which is attached to the support segment (44), and which includes at least an inner sealing portion (54) configured to engage an inner surface of the window (18), and an edge sealing portion configured to seal an edge (19) of the window (18) in its closed state,
wherein the support segment (44) comprises a vertical support section (66) which is configured to be arranged on the outside (O) of the frame profile (36) in a second direction (Y) which is perpendicular to the first direction (X) and to the third direction (Z),
wherein the support segment (44) comprises a vertical protrusion (78) which extends with respect to the vertical support section (66) in the third direction (Z), and
wherein the edge sealing portion comprises a window edge closure lip (76) which extends from the vertical protrusion (78) of the support segment (44) to the inside (I) in the second direction (Y) and which is configured to be engaged by the edge of the window (18).

2. The sealing profile strand (34) of claim 1, wherein the support section (44) comprises a lower support section (68) which is configured to be arranged on a lower side of a transversal portion (38) of the frame profile (36) in the third direction (Z).

3. The sealing profile strand (34) of claim 2, wherein the lower support section (68) comprises a locking section (70) which is configured to be engaged by a locking tongue (72) of the frame profile (36).

4. The sealing profile strand (34) of claim 3, wherein (i) a groove (80) is formed between the vertical protrusion (78) and the locking section (70) of the support segment (44), and/or wherein (ii) the window edge closure lip (76) extends from the vertical protrusion (78) of the support segment (44) across at least a part of the groove (80) in the second direction (Y).

5. The sealing profile strand (34) of anyone of claims 1 to 4, wherein the window edge closure lip (76) is configured to extend from the vertical protrusion (78) of the support segment (44) at least across the entire upper edge of the window.in the second direction (Y).

6. The sealing profile strand (34) of any one of claims 1 to 5, wherein the sealing segment (42) includes an upper sealing portion (46) which is configured to engage an upper part (52) of the frame profile (36).

7. The sealing profile strand (34) of claim 6, wherein the upper sealing portion (46) and the window edge closure lip (76) are connected to each other.

8. The sealing profile strand (34) of claim 7, wherein a lining portion (84) of the sealing segment (42) is arranged on the outside (O) of the vertical support section (66).

9. The sealing profile strand (34) of any one of claims 1 to 6, wherein a lining segment (86) is attached to the outside of the vertical support section (66) in the second direction (Y).

10. The sealing profile strand (34) of claim 9, wherein the lining segment (86) comprises a lug (88) which is introduces into a receptacle (90) of the support segment (44).

11. The sealing profile strand (34) of any one of claims 1 to 10, wherein the support segment (44) comprises an upper support section (64) and a lower support section (68) which are configured to be arranged on opposite sides of the frame profile (36) in the third direction (Z).

12. The sealing profile strand (34) of claim 11, wherein the inner sealing portion (54) is connected to the lower support section (68).

13. The sealing profile strand (34) of any one of claims 1 to 12, wherein
- the sealing segment (42) is mainly made of rubber elastomer and/or thermoplastic (elastomer) materials and/or wherein
- the support segment (44) is mainly made of rubber elastomer and/or thermoplastic (elastomer) materials, and/or wherein
- the support segment (44) includes a reinforcement portion (92), and/or wherein
- the sealing segment (42) and the support segment (44) are integrated by co-extrusion, and/or wherein
- the sealing segment (42) and the support segment (44) are made of the same material family.

14. A sealing arrangement (26) for a sliding window (18), including a frame profile (36) and a sealing profile strand (34) of any one of claims 1 to 13.
